# EUROPÄISCHE PATENTSCHRIFT

(11) **EP 3 187 247 B1**
(45) Veröffentlichungstag und Bekanntmachung des Hinweises auf die Patenterteilung: **05.08.2020**
(21) Anmeldenummer: 15202983.1
(22) Anmeldetag: 29.12.2015
(51) Int. Cl.: B01D 61/16, B01D 65/02

(54) **FILTERVERFAHREN ZUM FILTERN EINER FLÜSSIGKEIT**
FILTRATION METHOD FOR FILTERING A FLUID
PROCEDE DE FILTRE DESTINE A FILTRER UN LIQUIDE

(43) Veröffentlichungstag der Anmeldung: 05.07.2017
(73) Patentinhaber: Grundfos Holding A/S, 8850 Bjerringbro (DK)
(72) Erfinder: Dominiak, Dominik, 91- 718 Lodz (PL); Eriksen Gissel, Rikke, 9000 Aalborg (DK); Svendsen, Jacob Appelt Vibe, 8600 Silkeborg (DK); Zheng, Xing, 710048 Xi an (CN); Aarestrup, Jan Carøe, 8850 Bjerringbro (DK)
(74) Vertreter: Patentanwälte Vollmann Hemmer Lindfeld Partnerschaft mbB

(56) Entgegenhaltungen:
- US-A1- 2008 314 833
- US-A1- 2009 308 745
- US-A1- 2010 032 373
- US-A1- 2010 282 679
- US-A1- 2013 056 412

## Beschreibung

Die Erfindung betrifft ein Filterverfahren zum Filtern einer Flüssigkeit und eine Filtervorrichtung zum Filtern einer Flüssigkeit.

Bei der Filterung von Flüssigkeiten setzen sich eingangsseitig des zur Filterung verwendeten Filters üblicherweise Filterrückstände ab und verringern so kontinuierlich die Filterfähigkeit des Filters. Insofern ist es insbesondere während eines länger andauernden Filterprozesses erforderlich, den verwendeten Filter in gewissen Abständen von den Filterrückständen zu befreien. Zu diesem Zweck werden die Filter üblicherweise mit Flüssigkeit rückgespült. Diese Rückspülungen verringern typischerweise die Effizienz des Filterprozesses, was in besonderem Maße dann gilt, wenn zur Rückspülung des Filters ein Teil des bei der Filterung erzeugten Permeats verwendet wird.

Um die Entfernung von an dem Filter anhaftenden Ablagerungen bei der Rückspülung erleichtern zu können, ist es bekannt, der zu filternden Flüssigkeit eingangsseitig des Filters spezielle Vorbehandlungsmittel beizumengen, die in der Flüssigkeit eine Fällung von in der Flüssigkeit gelösten Stoffen und/oder eine Flockung kolloidaler Bestandteile der Flüssigkeit bewirken bzw. die Bindung der Filterrückstände an dem Filter verringern.

Zur Dosierung solcher Vorbehandlungsmittel sind unterschiedliche Vorgehensweisen gebräuchlich. Eine bekannte Methode besteht darin, die zu filternde Flüssigkeit mit einem konstanten Vorbehandlungsmittelstrom zu vermengen. Bei einer anderen vorbekannten Methode wird der zu filternden Flüssigkeit das Vorbehandlungsmittel in solcher Weise zugefügt, dass dessen Konzentration in der zu filternden Flüssigkeit während des gesamten Filterprozesses konstant gehalten wird. Beide Methoden haben aber den Nachteil, dass sie sich dann als ineffektiv erweisen, wenn sich der Verunreinigungsgrad der zu filternden Flüssigkeit während des Filterprozesses ändert.

Ein weiterer Ansatz zur Dosierung des Vorbehandlungsmittels besteht darin, eine Art geschlossenen Regelkreis zur Verfügung zu stellen und bestimmte, die Qualität der zu filternden Flüssigkeit betreffende Parameter mittels Sensoren zu erfassen. Diese Vorgehensweise stellt zwar gegenüber der Bereitstellung einer konstanten Menge oder Konzentration des Vorbehandlungsmittels eine gewisse Verbesserung dar, allerdings kann sich auch diese Maßnahme als ineffektiv erweisen, da bei ihr die Rahmenbedingungen vor und bei der Filterung in der Regel nicht in ihrer Gänze erfasst werden können.

US 2013/0056412 A1 offenbart ein Verfahren zur Dosierung von durchflussverbessernden Chemikalien in einem Membran-Bioreaktor. Gemäß diesem Verfahren wird basierend auf einem erfassten Parameter wie dem Transmembrandruck oder einem die Wasserqualität repräsentierenden Parameter die Dosierung des Flussverbesserers aktiviert und ausgeschaltet. Die Zudosierung wird solange fortgesetzt, bis der auslösende Grenzwert wieder unterschritten ist. Während dieser Dosierung ist die Zudosierung entweder im Wesentlichen konstant und wird für eine gewisse Zeit oder bis zum Unterschreiten des auslösenden Grenzwertes durchgeführt. Ferner ist es offenbart, die Dosierrate kontinuierlich oder schrittweise zu steigern bis der auslösende Grenzwert unterschritten ist.

US 2010/00323737 A1 offenbart ein Verfahren zum Betrieb einer Membranfiltereinrichtung, gemäß dem ein Koagulierungsmittel zudosiert wird. Dabei ist jedoch keine genaue Dosierung beschrieben, sondern das Einspritzen des Koagulierungsmittels wird lediglich ein- und ausgeschaltet. Dies geschieht, wenn die Durchlässigkeit der Membran unter einen bestimmten Grenzwert fällt.

US 2010/0282679 A1 offenbart ein Verfahren zur Anpassung der Menge eines Koagulationsmittels, welches stromaufwärts eines Filters in ein Membranfiltersystem eingespritzt wird. Zur Anpassung der Menge wird das Ergebnis gemessen und mit vorgegebenen Grenzwerten verglichen. Auf Grundlage dieses Vergleichs wird die Einspritzmenge des Mittels angepasst.

Vor diesem Hintergrund besteht die Aufgabe der Erfindung darin, ein Filterverfahren und eine Filtervorrichtung zum Filtern einer Flüssigkeit zur Verfügung zu stellen, mit welchen ein deutlich effizienterer Filterprozess realisierbar ist.

Diese Aufgabe wird durch ein Filterverfahren mit den in Anspruch 1 angegebenen Merkmalen gelöst. Vorteilhafte Weiterbildungen des Filterverfahrens nach Anspruch 1 ergeben sich aus den entsprechenden Unteransprüchen, der nachfolgenden Beschreibung sowie aus den beigefügten Zeichnungen.

Bei dem erfindungsgemäßen Filterverfahren, welches beispielsweise zur Wiederaufbereitung von Abwässern oder zur Trinkwasseraufbereitung dienen kann, wird bevorzugt ein Membranfilter als Filter verwendet. Vorzugsweise mittels mindestens einer Pumpe wird die zu filternde Flüssigkeit zu und durch den Filter geleitet. Hierbei bleiben im Regelfall Filterrückstände eingangsseitig des Filters zurück, die zumindest teilweise an der Eingangsseite des Filters anhaften. Um zumindest einen Großteil dieser Filterrückstände von dem Filter zu entfernen, wird der Filter in vorgegebenen Abständen mit einer Flüssigkeit und vorzugsweise mit einem Teil des bei der Filterung erzeugten Permeats rückgespült. Hinsichtlich der Abstände, in denen der Filter rückgespült wird, ist anzumerken, dass diese Abstände regelmäßige Zeitabstände sein können oder von einem maximalen Differenzdruck am Filter vorgegeben sein können. Zudem wird der zu filternden Flüssigkeit eingangsseitig des Filters vorzugsweise über eine Dosierpumpe ein Vorbehandlungsmittel zugeführt. Als Vorbehandlungsmittel können solche Mittel verwendet werden, die eingangsseitig des Filters eine Fällung oder Ausflockung von in der Flüssigkeit enthaltenen Stoffen bewirken und/oder vor allem die Bindung der Filterrückstände an der Eingangsseite des Filters verringern.

Gegenüber den bislang zur Filterung von Flüssigkeiten bekannten Filterverfahren zeichnet sich das erfindungsgemäße Filterverfahren durch eine neue Art der Dosierung des Vorbehandlungsmittels aus, die eine deutliche Steigerung der Effizienz des Filterprozesses bewirkt. In diesem Zusammenhang ist es erfindungswesentlich, dass während der Filterung kontinuierlich eine die Effizienz der Filterung beschreibende Prozessvariable berechnet wird und eine Dosiermenge des Vorbehandlungsmittels auf der Grundlage der Werte für die Prozessvariable oder eines hiervon abgeleiteten Kennwertes in vorgegebenen Abständen angepasst wird. Hierbei kann als Prozessvariable grundsätzlich jede, sich während des Filterprozesses ändernde Prozessgröße verwendet werden, welche die sich während des Prozesses ändernde Filterfähigkeit der gesamten, zur Filterung der Flüssigkeit verwendeten Filtervorrichtung wiederspiegelt und sich im Wesentlichen proportional zu einem Ablagerungsgrad an der Eingangsseite des Filters verhält. Somit liefern die während des Filterprozesses berechneten Werte der Prozessvariablen bzw. eines hiervon abgeleiteten Kennwertes fortwährend Informationen darüber, wie erfolgreich sich eine bestimmte Dosiermenge an Vorbehandlungsmittel in Verbindung mit der Rückspülung des Filters auf den Filterprozess als Ganzes auswirken. Insofern ist es bei Kenntnis der Prozessvariablen möglich, die Dosiermenge an Vorbehandlungsmittel in bestimmten Abständen an die Entwicklung der Prozessvariablen bzw. des davon abgeleiteten Kennwerts anzupassen und die Dosiermenge derart einzustellen, dass sich eine optimal mögliche Effizienz des Filterprozesses ergibt.

Die kontinuierlich während des gesamten Filterprozesses durchgeführte Berechnung der die Effizienz des Filterprozesses beschreibenden Prozessvariablen erfolgt erfindungsgemäß derart, dass der Filterprozess in mehrere aufeinanderfolgende, jeweils mit einer Rückspülung des Filters beginnende und vor Beginn der nächsten Rückspülung endende Filterzyklen aufgeteilt wird und eine zu speichernde Prozessvariable für jeden Filterzyklus an einem vorgegebenen Zeitpunkt des Filterzyklus gespeichert wird. D. h., es wird für jeden Filterzyklus ein Wert für die Prozessvariable berechnet, der sich aus mehreren kontinuierlich während des Filterzyklus durchgeführten Berechnungen der Prozessvariablen ergibt und die Größe der Prozessvariablen am Ende eines Filterzyklus, also unmittelbar vor der Rückspülung des nächstfolgenden Zyklus, wiederspiegelt. Aus diesen gespeicherten Endwerten der Prozessvariablen mehrerer aufeinanderfolgender Filterzyklen lässt sich ein Trend ableiten, der Auskunft darüber gibt, wie erfolgreich sich die Zuführung des Vorbehandlungsmittels auf die Effizienz des Filterprozesses ausgewirkt hat.

Die Neueinstellung der Dosiermenge des Vorbehandlungsmittels erfolgt vorzugsweise in Dosierschritten, welche jeweils eine bestimmte Anzahl von Filterzyklen umfassen. Demzufolge handelt es sich bei den Dosierschritten, in denen die Dosiermenge des Vorbehandlungsmittels jeweils angepasst wird, um aufeinander folgende Intervalle, welche jeweils einen oder mehrere Filterzyklen beinhalten. Die Anzahl der Filterzyklen pro Dosierschritt kann hierbei generell in Abhängigkeit von den Rahmenbedingungen des Filterprozesses gewählt werden, es hat sich aber gezeigt, dass bei einer Vielzahl von Fällen drei Filterzyklen pro Dosierschritt einen geeigneten Wert darstellen.

Wie bereits angemerkt, kann generell jede Prozessgröße, welche die sich während des Filterprozesses ändernde Filterfähigkeit der Filtervorrichtung wiedergibt und sich proportional zu dem Ablagerungsgrad an dem Filter verhält, als Prozessvariable zur Neueinstellung der Dosiermenge des Vorbehandlungsmittels verwendet werden. Als Beispiel für eine in dieser Hinsicht prinzipiell geeignete Prozessgröße sei ein Differenzdruck an dem Filter, d. h. die Differenz zwischen einem Eingangsdruck und einem Ausgangsdruck an dem Filter genannt. Dieser Differenzdruck steigt mit zunehmendem Ablagerungsgrad an dem Filter kontinuierlich an. Allerdings unterliegt dieser Differenzdruck während des Filterzyklus gewissen Mikroschwankungen, was es vergleichsweise aufwändig macht, für jeden Filterzyklus einen aussagekräftigen Endwert für den Differenzdruck zu berechnen. Daher ist es eigentlich günstiger, als Prozessvariable für die Neueinstellung der Dosiermenge des Vorbehandlungsmittels eine solche Prozessgröße zu verwenden, die über den Filterzyklus keinen derartigen Mikroschwankungen unterliegt. Eine solche Prozessgröße ist der pro Filterzyklus anfallende relative Energieverbrauch, der sich auch proportional zu der Filterfähigkeit des Filters verändert, d. h. mit zunehmenden Ablagerungen an der Eingangsseite des Filters zunimmt und auch Änderungen des Verunreinigungsgrads der zu filternden Flüssigkeit berücksichtigt. Deshalb ist erfindungsgemäß bevorzugt vorgesehen, dass die Prozessvariable ein relativer Energieverbrauch pro Filterzyklus ist, welcher durch Division eines Gesamtenergieverbrauchs pro Filterzyklus mit einem pro Filterzyklus erzeugten Netto-Permeatvolumen berechnet wird.

Zumindest im Hinblick auf die anfallenden Kosten beeinflusst neben dem Energieverbrauch auch der Verbrauch an Vorbehandlungsmittel die Effizienz des Filterprozesses. Bei der bevorzugten Verwendung des relativen Energieverbrauches pro Zyklus als Prozessvariable ist es daher zweckmäßig, in diesen Wert auch den pro Filterzyklus anfallenden Vorbehandlungsmittelverbrauch einfließen zu lassen. Dies geschieht über den Gesamtenergieverbrauch pro Filterzyklus. Insofern ist erfindungsgemäß vorgesehen, dass der Gesamtenergieverbrauch pro Filterzyklus die Summe der pro Filterzyklus für die Filterung, die Rückspülung und die Dosierung des Vorbehandlungsmittels erforderliche Energie sowie eines ein Äquivalent zu dem Vorbehandlungsmittelverbrauch darstellenden Energiewertes ist. Die Berechnung des Gesamtenergieverbrauchs pro Zyklus erfolgt demnach derart, dass pro Filterzyklus der Energiebedarf für die Filterung, d.h. der Energiebedarf der zur Förderung der Flüssigkeit zu und durch den Filter verwendeten Pumpe bzw. Pumpen, mit dem Energiebedarf für die Rückspülung, d.h. dem Energiebedarf einer zum Fördern der Rückspülflüssigkeit verwendeten Pumpe, und mit dem Energiebedarf für die Dosierung des Vorbehandlungsmittels, d.h. dem Energiebedarf einer zur Dosierung verwendeten Dosierpumpe, sowie mit dem ein Äquivalent zu dem Vorbehandlungsmittelverbrauch darstellenden Energiewert addiert werden. Letztgenannter Energiewert ergibt sich vergleichsweise einfach daraus, dass die Kosten für das verbrauchte Vorbehandlungsmittel entsprechenden Energiekosten gleichgesetzt werden, wobei bei bekannten Energiepreisen ein entsprechender Energiewert berechnet werden kann.

Das zur Berechnung des relativen Energieverbrauches pro Filterzyklus als Divisor verwendete Netto-Permeatvolumen entspricht bevorzugt dem pro Filterzyklus erzeugten Permeatvolumen abzüglich des Permeatvolumens, welches pro Filterzyklus zur Rückspülung des Filters verwendet wird. Somit wird berücksichtigt, dass für eine Rückspülung ein Teil des erzeugten Permeats benötigt wird, der dann nicht mehr zur eigentlichen Nutzung des Permeats zur Verfügung steht. Dabei wird pro Filterzyklus das absolute erzeugte Permeatvolumen aufsummiert und von diesem das bei Beginn des Filterzyklus zur Rückspülung verwendete Permeatvolumen abgezogen, sodass idealerweise zu jedem Zeitpunkt das bis zu diesem Zeitpunkt erzeugte Netto-Permeatvolumen bestimmt werden kann und zur fortwährenden Berechnung des relativen Energieverbrauches pro Filterzyklus verwendet werden kann.

Bei dem erfindungsgemäßen Filterverfahren wird die zu speichernde Prozessvariable zum Ende des Filterzyklus gespeichert und aus zwei oder mehr gespeicherten Prozessvariablen eine Funktionskurve ermittelt. Hierbei wird ein Steigungswert dieser Funktionskurve für jeden Dosierschritt ermittelt. Diese Vorgehensweise ist insofern vorteilhaft, als die Steigungswerte der ermittelten Funktionskurve einen besonders guten Aussagegehalt bezüglich der Wirksamkeit einer vorangehend eingestellten Menge an Vorbehandlungsmittel beinhalten. So zeigt eine Vergrößerung des Steigungswertes gegenüber dem Steigungswert des vorangehenden Dosierschrittes eine Verschlechterung der Effizienz der Filterung an, während ein sich gegenüber dem Steigungswert des vorangehenden Dosierschrittes verringernder Steigungswert eine verbesserte Effizienz der Filterung bedeutet. Im günstigsten Fall ist der Steigungswert negativ, was ein Anzeichen für eine optimale Effizienz der Filterung und eine optimal eingestellte Menge an Vorbehandlungsmittel ist.

Bezüglich der Einstellung der Dosiermenge des Vorbehandlungsmittels wird der Filterprozess bevorzugt in zumindest zwei generelle Phasen aufgeteilt. In diesem Zusammenhang ist vorteilhaft vorgesehen, dass in einer ersten Phase des Filterprozesses eine Grobeinstellung der Dosiermenge vorgenommen wird und die Dosiermenge in einer zweiten Phase des Filterprozesses ausgehend von einer bei der Grobeinstellung ermittelten Dosiermenge in einer Feineinstellung optimiert wird. Mit der Grobeinstellung wird angestrebt, die Dosiermenge in möglichst wenigen Dosierschritten, also möglichst schnell an eine hinsichtlich der Effizienz der Filterung optimale Dosiermenge anzunähern. Hierbei sind die Änderungen der Dosiermenge verhältnismäßig groß. Die bei der Grobeinstellung ermittelte Dosiermenge bildet nun den Startwert bei der Feindosierung, in welcher die Dosiermenge, zweckmäßigerweise bei kleineren Änderungen der Dosiermenge als bei der Grobeinstellung, noch weiter an die optimale Dosiermenge angenähert wird und im weiteren Verlauf auf solchen Werten gehalten wird, die eine größtmögliche Effizienz der Filterung bedeuten.

Im Rahmen der Grobeinstellung ist vorzugsweise vorgesehen, dass die Dosiermenge in aufeinanderfolgenden Dosierschritten solange um den gleichen Betrag erhöht wird, solange sich die gespeicherte Prozessvariable in eine gleiche Richtung zu einem einen optimalen Prozesszustand des Filterprozesses darstellenden Wert verändert, wobei die Grobeinstellung dann beendet wird, wenn sich die gespeicherte Prozessvariable in entgegengesetzte Richtung von dem den optimalen Prozesszustand darstellenden Wert wegbewegt. Hierbei startet die Grobeinstellung bevorzugt mit einem Schritt, bei dem der zu filternden Flüssigkeit kein Vorbehandlungsmittel beigemengt wird, also bei einer Dosiermenge = 0. Für diesen Dosierschritt wird ein Steigungswert der Funktionskurve ermittelt, in welcher die während des Dosierschrittes berechneten Werte für den gespeicherten relativen Energieverbrauch dargestellt sind. In einem daraus direkt folgenden Dosierschritt wird der zu filternden Flüssigkeit eine bestimmte Dosiermenge an Vorbehandlungsmittel beigemengt und der Steigungswert für diesen zweiten Dosierschritt berechnet. Hat sich der Wert des Steigungswerts von dem ersten Dosierschritt zu dem zweiten Dosierschritt verringert, wird die Dosiermenge in weiteren Dosierschritten so lange jeweils um den gleichen Betrag wie von dem ersten zu dem zweiten Dosierschritt erhöht, bis der Wert des Steigungswerts ansteigt. Dieses Ansteigen des Steigungswerts ist ein Anzeichen dafür, dass eine vergleichsweise optimale Dosiermenge einen Wert hat, der zwischen den Dosiermengen der beiden letzten Dosierschritte liegt. Es kann somit eine zwischen den Dosiermengen der beiden letzten Dosierschritte liegende Dosiermenge als Startpunkt der Feineinstellung gewählt werden.

Bei der Feineinstellung der Dosierung wird die Dosiermenge vorteilhafterweise in aufeinanderfolgenden Dosierschritten jeweils neu eingestellt, wobei sie in Abhängigkeit von der Entwicklung des Steigungswerts verändert oder beibehalten wird. Die Länge der Dosierschritte bei der Feineinstellung ist zweckmäßigerweise gleich der Länge bei der Grobeinstellung der Dosierung und umfasst somit auch vorzugsweise drei Filterzyklen. In den Dosierschritten wird die Dosiermenge entweder vergrößert oder verkleinert, je nachdem, welche Veränderung der Dosiermenge eine Veränderung des Steigungswerts in Richtung zu einem einen optimalen Prozesszustand des Filterprozesses darstellenden Wert erwarten lässt. Erreicht der Steigungswert diesen, einen optimalen Prozesszustand des Filterprozesses darstellenden Wert, wird die Dosiermenge zweckmäßigerweise beibehalten, d. h. nicht geändert.

Anders als bei der Grobeinstellung der Dosierung des Vorbehandlungsmittels wird die Dosiermenge bei den Dosierschritten der Feineinstellung zweckmäßigerweise variabel geändert, wobei der Betrag, um welchen die Dosiermenge geändert wird, auf der Grundlage der Tendenz der Steigungswerte der Funktionskurve für den relativen Energieverbrauch in den direkt vorangehenden Dosierschritten festgelegt wird. Hierzu werden die Steigungswerte der Funktionskurve für den relativen Energieverbrauch der einzelnen Dosierschritte zweckmäßigerweise in einem FIFO-Puffer (First IN-First Out-Puffer) gespeichert. Der Betrag der Dosiermenge eines nun folgenden Dosierschrittes wird dann auf der Grundlage der Tendenz (abnehmend oder ansteigend) der gespeicherten Steigungswerte der vorangehenden Dosierschritte vorzugsweise mittels eines speziell hierfür vorgesehenen Rechenalgorithmus verändert. Hierbei wird die Prozessdynamik derart berücksichtigt, dass die nächste Dosiermenge in einem Fall, in dem die Steigungswerte in den vorangehenden Dosierschritten um einen bestimmten Wert schwanken, d. h. unterhalb und oberhalb eines bestimmten Wertes liegen, verringert wird. Bei einer Entwicklung in den vorangehenden Dosierschritten, bei der sich die Steigungswerte stetig vergrößern oder stetig verkleinern, wird die nächste Dosiermenge vergrößert. Es hat sich gezeigt, dass diese Vorgehensweise besonders geeignet ist, Qualitätsänderungen der zu filternden Flüssigkeit, d. h. eine sich ändernde Feststoffbeladung bzw. Verunreinigung der zu filternden Flüssigkeit auszugleichen.

Gravierende Änderungen der Prozessbedingungen während der Filterung, wie beispielsweise eine deutliche Änderung der Feststoffbeladung der zu filternden Flüssigkeit, können zu einer sprunghaften Änderung der die Grundlage für die Einstellung der Dosiermenge bildenden Prozessvariablen führen. Tritt eine solche sprunghafte Änderung der Prozessvariablen in der Phase der Feineinstellung der Dosiermenge auf, ist vorteilhafterweise vorgesehen, dass die Feineinstellung der Dosiermenge beendet wird und eine erneute Grobeinstellung der Dosiermenge vorgenommen wird. Das Ziel dieser Maßnahme besteht darin, möglichst schnell wieder eine bezüglich der geänderten Prozessbedingungen optimierte Dosiermenge des Vorbehandlungsmittels zu erlangen.

Gemäß einer weiteren vorteilhaften Weiterbildung des erfindungsgemäßen Filterverfahrens wird das Vorbehandlungsmittel der zu filternden Flüssigkeit mit einer Verzögerung nach einer Rückspülung des Filters beigefügt. Demzufolge wird der Filter bevorzugt unmittelbar nach seiner Rückspülung zunächst von der noch kein Vorbehandlungsmittel enthaltenden Flüssigkeit angeströmt und kommt erst nach einer gewissen Zeitspanne mit der dann das Vorbehandlungsmittel enthaltenden Flüssigkeit in Kontakt. Diese Maßnahme basiert auf der Erkenntnis, dass sich die Vorbehandlungsmittel im Regelfall stärker an dem Filter binden als die in der zu filternden Flüssigkeit enthaltenen Feststoffe. Insofern ist es vorteilhafter, wenn sich zunächst nur diese Feststoffe an dem Filter ablagern und erst nachfolgend das Vorbehandlungsmittel, da der Filter auf diese Weise bei der Rückspülung des Filters leichter von allen Ablagerungen befreit werden kann.

Bevorzugt werden der Beginn und das Ende eines Filterzyklus durch Überwachung der kontinuierlich berechneten Prozessvariablen oder einer in der Filtervorrichtung gemessenen Prozessgröße ermittelt. Diese Vorgehensweise basiert auf der Tatsache, dass sich eine Prozessgröße, wie der Energieverbrauch einer Förderpumpe oder eine Druckdifferenz an dem Filter, rapide ändert, falls der Filterzyklus endet oder beginnt. Diese rapide Änderung wird vorzugsweise als Anzeichen für einen Beginn oder ein Ende des Filterzyklus verwendet, wobei eine rapide Abnahme der Prozessvariablen und/oder der gemessenen Prozessgröße ein Ende eines Filterzyklus anzeigt und ein rapider Anstieg der Prozessvariablen und/oder der gemessenen Prozessgröße den Beginn eines Filterzyklus anzeigt.

Neben dem vorab beschriebenen Filterverfahren ist auch eine zur Durchführung des Filterverfahrens ausgebildete Filtervorrichtung Gegenstand der Erfindung. Diese Filtervorrichtung zum Filtern einer Flüssigkeit weist mindestens einen Filter auf, durch welchen eine Flüssigkeit geleitet wird, wobei die Flüssigkeit mittels des Filters von Feststoffen befreit wird, die in der zu filternden Flüssigkeit enthalten sind. Bei dem Filter handelt es sich vorzugsweise um einen Membranfilter. Zum Fördern der Flüssigkeit zu und durch den Filter ist die Filtervorrichtung mit mindestens einer Pumpe ausgestattet. Darüber hinaus verfügt die Filtervorrichtung über eine Dosierpumpe. Diese Dosierpumpe, welche typischerweise als Verdrängerpumpe ausgebildet ist, weist in bekannter Weise einen Dosierraum mit einem an diesen angrenzenden bzw. in diesem angeordneten Verdrängerkörper auf. Der Verdrängerkörper ist durch einen Verdrängerantrieb, z. B. einen Antriebsmotor, bewegbar. Die Dosierpumpe dient dazu, der Flüssigkeit anströmseitig des Filters ein Vorbehandlungsmittel beizumengen. Zum Steuern dieser Dosierpumpe, d. h. zum Steuern deren Abgabe von Vorbehandlungsmittel in die zu filternde Flüssigkeit bzw. zum Steuern deren Verdrängerantriebs, weist die Filtervorrichtung eine Steuerung auf. Diese Steuerung ist bevorzugt eine elektronische Steuerung. Erfindungsgemäß ist die Steuerung derart ausgebildet, dass sie während der Filterung kontinuierlich eine die Effizienz der Filterung beschreibende Prozessvariable berechnet und die Dosierpumpe auf der Grundlage der Werte für die Prozessvariablen oder eines hiervon abgeleiteten Kennwertes steuert. Wie bereits anhand des erfindungsgemäßen Filterverfahrens beschrieben, bewirkt diese Ausgestaltung der Steuerung, dass die erfindungsgemäße Filtervorrichtung gegenüber den bekannten Filtervorrichtungen der in Rede stehenden Art eine deutliche Steigerung der Effizienz des Filterprozesses ermöglicht.

Bei der Steuerung kann es sich um eine separate Steuereinrichtung handeln, die mit der Dosierpumpe signalverbunden ist, aber unter Umständen räumlich getrennt von der Dosierpumpe angeordnet ist. Erfindungsgemäß bevorzugt ist allerdings vorgesehen, dass die Steuerung integraler Bestandteil der Dosierpumpe ist. Die Steuerung ist somit vorzugsweise im oder unmittelbar an einem Gehäuse der Dosierpumpe angeordnet.

Nachfolgend ist die Erfindung anhand eines in der Zeichnung dargestellten Ausführungsbeispiels näher erläutert. In der Zeichnung zeigt:
- Fig. 1:: eine Filtervorrichtung in einer schematisch stark vereinfachten Prinzipskizze,
- Fig. 2:: ein Funktionsdiagramm, in welchem die zeitliche Entwicklung eines Zusammenhangs zwischen einer Prozessvariablen eines Filterprozesses in Verbindung mit einer auf der Grundlage der Werte für die Prozessvariable eingestellten Dosiermenge eines der zu filternden Flüssigkeit zugefügten Vorbehandlungsmittels dargestellt ist,
- Fig. 3:: einen Ablaufplan für eine Grobeinstellung der Dosiermenge des Vorbehandlungsmittels,
- Fig. 4:: einen Ablaufplan für eine Feineinstellung der Dosiermenge des Vorbehandlungsmittels und
- Fig. 5:: einen Ablaufplan für die Festlegung einer Änderung der Dosiermenge des Vorbehandlungsmittels während der Feineinstellung.

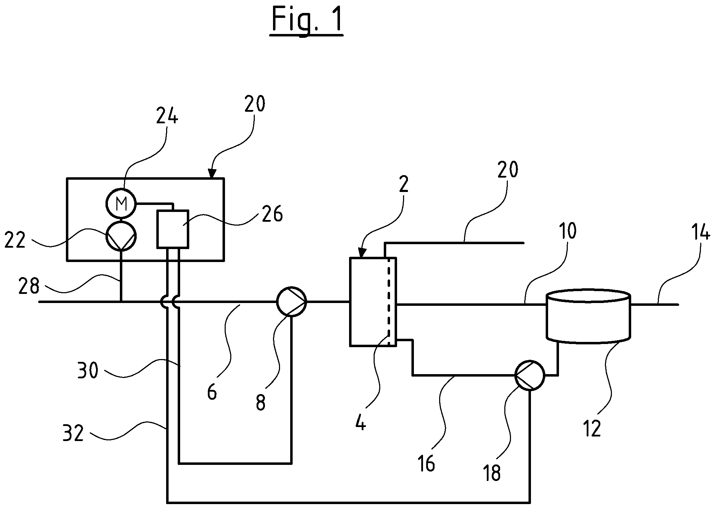

Die in Fig. 1 dargestellte Filtervorrichtung weist eine Filtereinheit 2 auf, welche mit einem Filter 4 in Form eines Membranfilters ausgestaltet ist. Eingangsseitig mündet an der Filtereinheit 2 eine Leitung 6. Über diese Leitung 6 wird eine zu filternde Flüssigkeit zu der Filtereinheit 2 geleitet. Hierbei wird die zu filternde Flüssigkeit mittels einer Pumpe 8 zu der Filtereinheit 2 und dort durch den Filter 4 gefördert. Ausgangsseitig der Filtereinheit 2 schließt sich an diese eine Leitung 10 an. Über diese Leitung 10 gelangt die gefilterte Flüssigkeit, d. h. das bei der Filterung erzeugte Permeat, in einen Sammeltank 12. An dem Sammeltank 12 ist eine Ausgangsleitung 14 ausgebildet, über welche das erzeugte Permeat zu einem Endverbraucher bzw. zu seiner endgültigen Bestimmung geleitet wird.

Während des Filterprozesses setzen sich in der zu filternden Flüssigkeit enthaltene Feststoffe an der Eingangsseite des Filters 4 ab. Diese Ablagerungen verringern während des Filterprozesses kontinuierlich die Filterfähigkeit des Filters 4. Daher wird der Filter 4 in vorgegebenen Abständen durch eine Rückspülung von den Ablagerungen befreit. Zu diesem Zweck wird ein Teil des bei der Filterung erzeugten Permeats, welches in dem Sammeltank 12 gespeichert ist, über eine sowohl mit dem Sammeltank 12 als auch mit der Filtereinheit 2 verbundene Leitung 16 in die Filtereinheit 2 geleitet und dort durch den Filter 4 von dessen Ausgangsseite zu dessen Innenseite geleitet. Hierbei fördert eine in der Leitung 16 angeordnete Pumpe 18 das zur Rückspülung verwendete Permeat von dem Sammeltank 12 durch den Filter 4. Infolge der Rückspülung lösen sich die Ablagerungen an der Eingangsseite des Filters 4 von dem Filter 4 und werden zusammen mit dem zur Rückspülung verwendeten Permeat aus der Filtereinheit 2 über einen Auslass 20 aus der Filtereinheit 2 entfernt.

Zur Verbesserung der Reinigung des Filters 4 bei dessen Rückspülung wird der zu filternden Flüssigkeit eingangsseitig der Filtereinheit 2 ein Vorbehandlungsmittel beigemengt. Hierzu dient eine Dosierpumpe 20, die ein Pumpenteil 22, einen Antrieb 24 für das Pumpenteil 22 sowie eine Steuerung 26 aufweist, deren Bedeutung im weiteren Verlauf noch ausführlich dargelegt wird. Über eine Leitung 28 ist die Dosierpumpe 20 anströmseitig der Pumpe 8 mit der Leitung 6 verbunden. Die Dosierpumpe 20 empfängt ein Leistungssignal von den Pumpen 8 und 18. Zu diesem Zweck ist die Pumpe 8 über eine Signalleitung 30 mit der Steuerung 26 der Dosierpumpe 20 verbunden, während die Pumpe 18 über eine Signalleitung 32 mit der Steuerung 26 der Dosierpumpe 20 verbunden ist. Darüber hinaus können die Signalleitungen 30 und 32 Informationen bezüglich des Durchflusses der Pumpen 8 und 18 zu der Steuerung 26 übermitteln, wobei diese Informationen von den Pumpen 8 und 18 oder von externen Durchflusssensoren bereitgestellt werden, die in Fig. 1 nicht dargestellt sind.

Die Steuerung 26 der Dosierpumpe 20 ist vorrangig zur Steuerung bzw. zur Einstellung der von der Dosierpumpe 20 abgegebenen Menge an Vorbehandlungsmittel vorgesehen. Hierbei ist die Steuerung 26 derart ausgebildet, dass von ihr die nachfolgend beschriebenen Verfahrensschritte veranlasst werden.

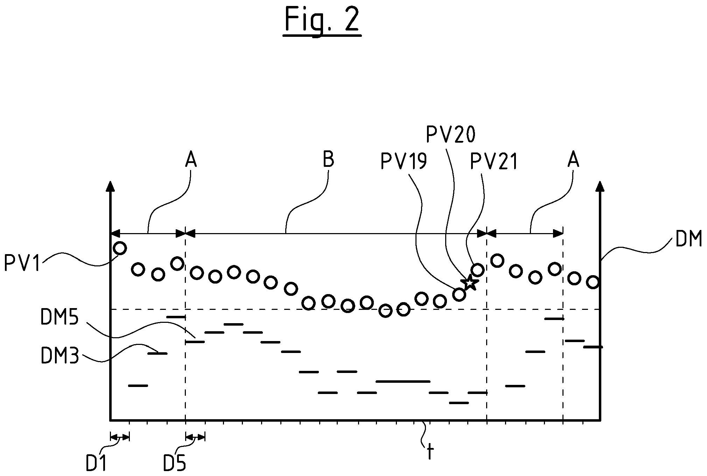

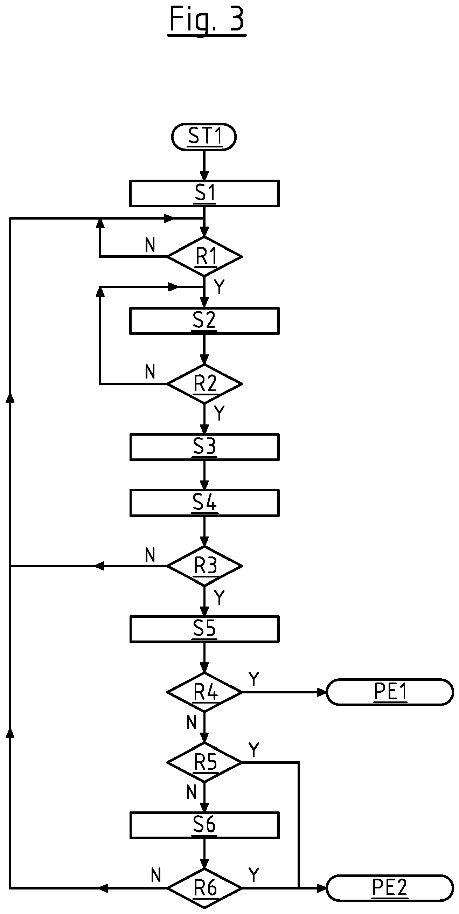

Zu Beginn eines Filterprozesses wird von der Steuerung 26 mittels eines zu diesem Zweck vorgesehenen Steuerungsprogramms eine Grobeinstellung A (Fig. 2) der von der Dosierpumpe 20 abgegebenen Dosiermenge des Vorbehandlungsmittels veranlasst. Die Arbeitsweise in diesem Steuerprogramm zur Grobeinstellung A entspricht dem in Fig. 3 dargestellten Ablaufplan und wird anhand der Fig. 2 und 3 erläutert.

Das Steuerungsprogramm zur Grobeinstellung A beginnt bei einem Start ST1. In einem auf den Start ST1 folgenden Programmschritt S1 wird ein erster Betrag für die Dosiermenge DM in einem ersten Dosierschritt D1 festgelegt. Dieser Dosierschritt D1 umfasst, wie auch alle nachfolgenden Dosierschritte, M Filterzyklen, wobei die Filterzyklen jeweils mit einer Rückspülung des Filters 4 beginnen und unmittelbar vor der nächsten Rückspülung des Filters 4 enden. Wie aus Fig. 2 deutlich wird, in welcher die Dosiermengen DM (rechte vertikale Achse) für die Dosierschritte als waagerechte Linien dargestellt sind, beträgt die Dosiermenge DM für den ersten Dosierschritt D1 Null.

Nach dem Programschritt S1 folgt eine Abfrage R1, in welcher geklärt wird, ob bereits eine Rückspülung des Filters 4 erfolgt ist. Ist das Ergebnis dieser Abfrage R1 N (nein), so wird die Abfrage R1 wiederholt. Bei einem Ergebnis Y (ja), wird ein Programmschritt S2 ausgeführt.

In dem Programmschritt S2 wird kontinuierlich der relative Energieverbrauch während des Filterzyklus berechnet. Dieser ergibt sich durch Division eines Gesamtenergieverbrauchs pro Filterzyklus mit einem pro Filterzyklus erzeugten Netto-Permeatvolumen. Hierbei werden zur Ermittlung des Gesamtenergieverbrauchs der Energieverbrauch zur Filterung, also der Energieverbrauch der Pumpe 8, der Energieverbrauch zur Rückspülung, also der Energieverbrauch der Pumpe 18, der Energieverbrauch zur Dosierung des Vorbehandlungsmittels, also der Energieverbrauch der Dosierpumpe 20 und ein Energiewert, welcher ein Äquivalent zu dem Vorbehandlungsmittelverbrauch darstellt, miteinander addiert und dieser Gesamtenergieverbrauch durch das Netto-Permeatvolumen, welches die Differenz zwischen der absolut erzeugten Permeatmenge und der zur Rückspülung verwendeten Permeatmenge ist, dividiert. Diese Berechnung wird während des gesamten Filterzyklus kontinierlich durchgeführt, wobei in einer Abfrage R2 jeweils geprüft wird, ob das Ende des Filterzyklus erreicht ist. Ist das Ergebnis dieser Abfrage N (nein), wird der Programmschritt S2 erneut ausgeführt. Bei einem Ergebnis Y (ja) der Abfrage R2 erfolgt ein Programmschritt S3.

In dem Programmschritt S3 werden die während des Filterzyklus kontinuierlich berechneten Werte für den relativen Energieverbrauch zu einem Endwert für den relativen Energieverbrauch zusammengeführt und dieser Endwert gespeichert. Auf den Programmschritt S3 folgt ein Programmschritt S4. In diesem Programmschritt S4 wird eine Zählvariable für den Filterzyklus um einen Wert von 1 hochgesetzt. Auf den Programmschritt S4 folgt eine Abfrage R3. In dieser Abfrage R3 wird geprüft, ob die in Programmschritt S4 hochgesetzte Zählervariable für den Filterzyklus mit der Gesamtanzahl M der Filterzyklen pro Dosierschritt übereinstimmt. Ist das Ergebnis dieser Abfrage N (nein), beginnt der vorab beschriebene Vorgang wieder bei der Abfrage R1. Ist das Ergebnis der Abfrage R3 Y (ja), wird der Programmschritt S5 durchgeführt.

In dem Programmschritt S5 werden aus den gespeicherten Werten für den relativen Energieverbrauch der M Filterzyklen eine virtuelle Funktionskurve des relativen Energieverbrauchs und ein Steigungswert dieser Funktionskurve für den derzeitigen Dosierschritt ermittelt. Diese Steigungswerte, auf deren Grundlage die Dosiermenge DM des Vorbehandlungsmittels eingestellt wird.

Auf den Programmschritt S5 folgt eine Abfrage R4. In der Abfrage R4 wird geprüft, ob der in Programmschritt S5 ermittelte Steigungswert bzw. die Prozessvariable einen Wert kleiner als Null aufweist. Bei einem Ergebnis Y (ja) dieser Abfrage R4 ist ein Programmende PE1 erreicht, welches bedeutet, dass die augenblickliche Dosiermenge DM eine optimale Dosiermenge des Vorbehandlungsmittels ist. Bei einem Ergebnis N (nein) der Abfrage R4 wird eine weitere Abfrage R5 vorgenommen.

In der Abfrage R5 wird abgefragt, ob der in Programmschritt S5 ermittelte Steigungswert bzw. die Prozessvariable des derzeitigen Dosierschritts größer als der Steigungswert des vorangehenden Dosierschritts ist. Ist das Ergebnis dieser Abfrage R5 Y (ja) ist ein Programmende PE2 erreicht, welches bedeutet, dass die Dosiermenge des vorangehenden Dosierschritts die optimale Dosierung der Grobeinstellung ist. Dies ist in Fig. 2 bei der Dosiermenge DM3 der Fall. Ist das Ergebnis der Abfrage R5 N (nein), wird ein Programmschritt S6 durchgeführt.

In dem Programmschritt S6 wird die Dosiermenge DM des Vorbehandlungsmittels um einen feststehenden Betrag erhöht. Anschließend wird eine Abfrage R6 durchgeführt, in welcher geprüft wird, ob die Dosiermenge nach dem Programmschritt S6 einen maximal zulässigen Wert für die Dosiermenge DM überschreitet. Bei einem Ergebnis Y (ja) dieser Abfrage R6 ist auch das Programmende PE2 erreicht, was bedeutet, dass die Dosiermenge des vorangehenden Dosierschritts die maximale Dosierung der Grobeinstellung ist. Ist das Ergebnis der Abfrage R6 N (nein), beginnt der Prorammablauf aufs Neue mit der Abfrage R1.

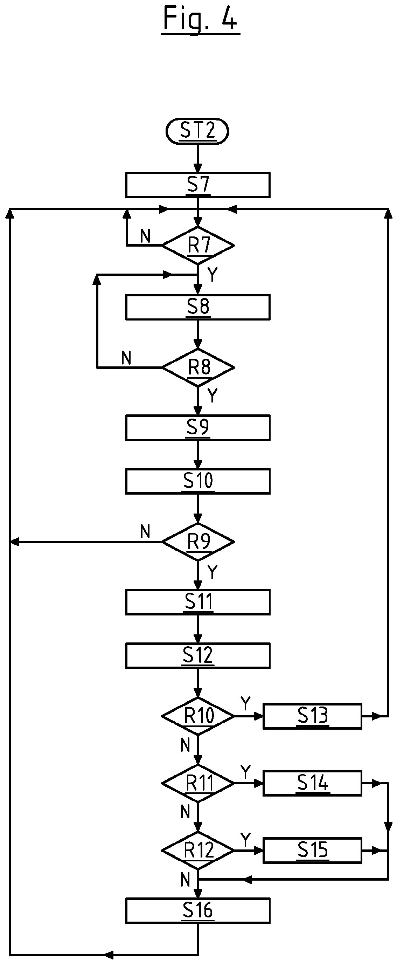

Wenn bei der Grobeinstellung A der Dosierung des Vorbehandlungsmittels eines der Programmenden PE1 oder PE2 erreicht worden ist, wird in der Steuerung 26 ein Programm zur Feineinstellung B der Dosiermenge des Vorbehandlungsmittels aufgerufen, das nachfolgend anhand der Fig. 2 und 4 erläutert wird.

Das Steuerprogramm zur Feineinstellung B beginnt bei einem Start ST2. In einem auf den Start ST2 folgenden Programmschritt S7 wird auf der Grundlage der Grobeinstellung A eine erste als näherungsweise optimal angesehene Dosiermenge DM5 (Fig. 2) für einen ersten Dosierschritt D5 (Fig. 2) der Feineinstellung B eingestellt.

Auf den Programmschritt S7 folgt eine Abfrage R7. In der Abfrage R7 wird abgefragt, ob bereits eine Rückspülung des Filters 4 erfolgt ist. Ist das Ergebnis dieser Abfrage R7 N (nein), so wird die Abfrage R7 solange wiederholt, bis das Ergebnis der Abfrage R7 Y (ja) ist. Bei dem Ergebnis Y der Abfrage R7 wird der Programmschritt S8 ausgeführt.

In dem Programmschritt S8 wird der relative Energieverbrauch während des Filterzyklus berechnet. Die Vorgehensweise ist hierbei identisch zu derjenigen bei dem Programmschritt S2 der Grobeinstellung A. Die Berechnung des relativen Energieverbrauchs erfolgt kontinuierlich während des gesamten Filterzyklus, wobei in einer Abfrage R8 nachgefragt wird, ob das Ende des Filterzyklus erreicht ist. Ist das Ergebnis dieser Abfrage R8 N (nein), so wird der Programmschritt S8 erneut ausgeführt. Bei einem Ergebnis Y (ja) der Abfrage R8 folgen auf die Abfrage R8 ein Programmschritt S9 und darauf ein Programmschritt S10.

Die Programmschritte S9 und S10 sind identisch mit den Programmschritten S3 und S4 bei der Grobeinstellung A. So werden in Programmschritt S9 die während des Filterzyklus kontinuierlich berechneten Werte für den relativen Energieverbrauch zu einem Endwert zusammengeführt und dieser Endwert gespeichert, während in Programmschritt S10 eine Zählervariable für den Filterzyklus um einen Wert von 1 hochgesetzt wird.

Auf den Programmschritt S10 folgt eine Abfrage R9, in welcher geprüft wird, ob die in Programmschritt S10 hochgesetzte Zählervariable für den Filterzyklus mit der Gesamtanzahl M der Filterzyklen pro Dosierschritt übereinstimmt. Bei einem Ergebnis N (nein) dieser Abfrage R9 beginnt der vorab beschriebene Vorgang wieder mit der Abfrage R7, auf welche der Programmschritt S8, die Abfrage R8, die Programmschritte S9 und S10 sowie die Abfrage R9 folgen. Ansonsten, d.h. bei einem Ergebnis Y (ja) der Abfrage R9, wird der Programmschritt S11 ausgeführt.

Der Programmschritt S11 stimmt mit dem Programmschritt S5 bei der Grobeinstellung A überein. Demzufolge werden in dem Programmschritt S11 aus den gespeicherten Werten für den relativen Energieverbrauch der M Filterzyklen eine virtuelle Funktionskurve des relativen Energieverbrauchs ermittelt und ein Steigungswert DIR für den derzeitigen Dosierschritt ermittelt.

In dem auf Programmschritt S11 folgenden Programmschritt S12 werden die Richtungen der in Programmschritt S11 ermittelten Steigungswerte (+ oder -) zu einem FIFO-Puffer (First IN-First OUT-Puffer) weitergeleitet und dort abgespeichert.

Anschließend erfolgt eine Abfrage R10. In der Abfrage R10 wird abgefragt, ob der in Programmschritt S11 ermittelte Steigungswert DIR der virtuellen Funktionskurve des relativen Energieverbrauchs für den gegenwärtigen Dosierschritt kleiner als Null also negativ ist. Ist das Ergebnis der Abfrage R10 Y (ja), wird keine Änderung der Dosiermenge DM vorgenommen und der Programmschritt S13 ausgeführt.

In dem Programmschritt S13 wird ein Zähler für den Dosierschritt um den Wert 1 hochgesetzt und die Feineinstellung B beginnt wieder bei der Abfrage R7 für den nächsten Dosierschritt, woraufhin der Programmschritt S8, die Abfrage R8, die Programmschritte S9 und S10, die Abfrage R9, die Programmschritte S11 und S12 sowie die Abfrage R10 folgen. Ist das Ergebnis der Abfrage R10 N (nein), erfolgt die Abfrage R11.

In der Abfrage R11 wird abgefragt, ob der in Programmschritt S11 ermittelte Steigungswert DIR der virtuellen Funktionskurve des relativen Energieverbrauchs für den vorangehenden Dosierschritt kleiner als Null also negativ gewesen ist. Bei einem Ergebnis Y (ja) dieser Abfrage R11 wird der Programmschritt S14 ausgeführt, in dem der Wert für den Steigungswert DIR auf einen Wert von - 1 gesetzt wird, also DIR = -1. Anschließend wird der Programmschritt S16 ausgeführt.

In dem Programmschritt S16 wird eine neue Dosiermenge DM für den nächsten Dosierschritt festgelegt und der Zähler für den Dosierschritt um den Wert 1 heraufgesetzt. Daraufhin beginnt die Feineinstellung B für diesen nächsten Dosierschritt wieder bei der Abfrage R7. Die Festlegung der Dosiermenge DM in Programmschritt S16 ergibt sich hierbei aus der Summe der gegenwärtigen Dosiermenge DM und dem Produkt aus dem Steigungswert DIR und aus einem Dosiermengenänderungswert DMA, welcher in einem in Verbindung mit dem FIFO-Puffer verwendeten Programm ermittelt wird. Hierauf wird nachfolgend noch eingehender eingegangen. Nach der Ausführung des Programmschritts S16 beginnt die Feineinstellung B für den nächsten Dosierschritt wieder bei der Abfrage R7.

Bei einem Ergebnis N (nein) der Abfrage R11 folgt eine Abfrage R12, in welcher abgefragt wird, ob der in Programmschritt S11 ermittelte Steigungswert DIR der virtuellen Funktionskurve des gespeicherten relativen Energieverbrauchs für den gegenwärtigen Dosierschritt größer als der Steigungswert DIR des vorangehenden Dosierschritts ist. Ist das Ergebnis dieser Abfrage Y (ja), wird der Programmschritt S15 durchgeführt, in dem das Vorzeichen des Steigungswerts DIR umgekehrt wird also DIR = DIR ^{∗} (-1). Darauf folgend wird der Programmschritt S16 durchgeführt. Bei einem Ergebnis N (nein) der Abfrage R12 wird direkt der Programmschritt S16 durchgeführt.

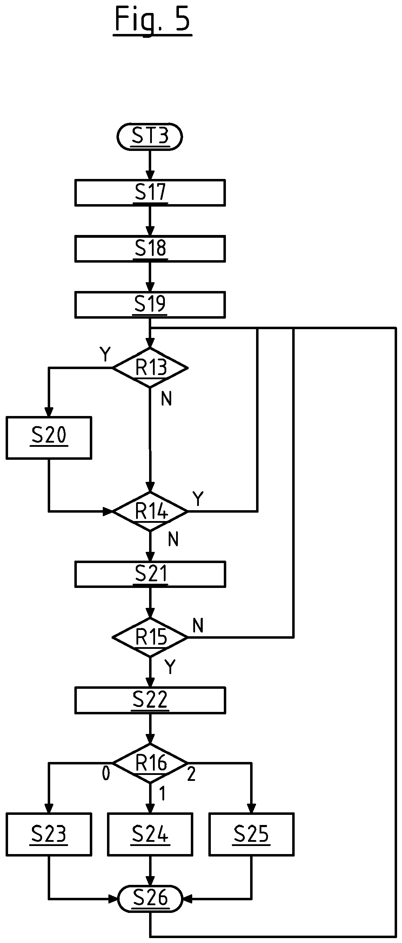

Der Programmablauf zur Ermittlung des Dosiermengenänderungswerts DMA geht aus Fig. 5 hervor. Das Programm beginnt bei einem Start ST3. Dem Start ST3 folgt ein Programmschritt S17. In dem Programmschritt 17 wird ein drei Elemente umfassender FIFO-Puffer geschaffen. Auf den Programmschritt S17 erfolgt ein Programmschritt S18, in welchem die Grenzen festgelegt werden, innerhalb derer die Dosiermenge DM geändert werden kann, d.h., es werden eine Dosiermenge DMₘᵢₙ und eine Dosiermenge DMₘₐₓ festgelegt. In einem auf den Dosierschritt S18 folgenden Programmschritt S19 wird ein Dosiermengenänderungsfaktor DMF festgelegt. Erfindungsgemäß bevorzugt ist der Dosiermengenänderungsfaktor DMF = 2.

In einer nachfolgenden Abfrage R13 wird abgefragt, ob die Dosiermenge DM der letzten drei Dosierschritte die in Programmschritt S18 festgelegten Grenzen der Dosiermenge erreicht hat. Bei einem Ergebnis Y (ja) der Abfrage R13, wird die Dosiermenge DM in einem Programmschritt S20 auf den Wert DMₘᵢₙ gesetzt. Anschließend wird eine Abfrage R14 durchgeführt.

In der Abfrage R14 wird auf den im Programmschritt S11 der Feineinstellung B ermittelten Steigungswert DIR zurückgegriffen und abgefragt, ob der Steigungswert DIR negativ ist. Diese Abfrage R14 wird auch unmittelbar nach der Abfrage R13 vorgenommen, wenn das Ergebnis der Abfrage R13 N (nein) ist, d.h. wenn die Dosiermenge DM der letzten drei Dosierschritte die in Programmschritt S18 festgelegten Grenzen der Dosiermenge DM nicht erreicht hat. Bei einem Ergebnis Y (ja) der Abfrage R14 wird wieder zu der Abfrage R13 zurückgegangen, ansonsten, d.h. bei einem Ergebnis N (nein) der Abfrage R14 wird der Programmschritt S21 ausgeführt, in welchem die Tendenz der Steigungswerte DIR (0 für einen abnehmenden Steigungswert und 1 für einen ansteigenden Steigungswert) in dem FIFO-Puffer abgelegt werden.

Dem Programmschritt S21 folgt eine Abfrage R15, in welcher abgefragt wird, ob der FIFO-Puffer voll ist, also drei Werte enthält. Ist das Ergebnis der Abfrage R15 N (nein), wird das Programm erneut mit der Anfrage R13 aufgenommen. Bei einem Ergebnis Y (ja) der Abfrage R15 folgt ein Programmschritt S22.

In dem Programmschritt S22 wird gezählt, wie häufig sich die Tendenz der in dem FIFO-Puffer abgelegten drei Steigungswerte DIR (0 für einen abnehmenden Steigungswert und 1 für einen ansteigenden Steigungswert) geändert hat.

Auf den Programmschritt S22 folgt eine Abfrage R16, in welcher abgefragt wird, ob sich die Tendenz des Steigungswerts DIR keinmal (Ergebnis 0), einmal (Ergebnis 1) oder zweimal (Ergebnis 2) geändert hat. Ist das Ergebnis der Abfrage R16 0, so wird der Programmschritt S23 ausgeführt, während bei einem Ergebnis 1 der Abfrage R16 der Programmschritt S24 und bei einem Ergebnis 2 der Abfrage R16 der Programmschritt S25 durchgeführt werden.

In den Programmschritt S23, S24 und S25 wird der im Programmschritt S16 der Feineinstellung B verwendete Dosiermengenänderungswert DMA ermittelt. Hierbei ergibt sich der Dosiermengenänderungswert DMA bei dem Programmschritt S23 durch Multiplikation der vorangehenden Dosiermenge DM mit dem Dosiermengenänderungsfaktor DMF. Bei dem Programmschritt wird der Dosiermengenänderungswert DMA beibehalten und bei dem Programmschritt S25 ergibt sich der Dosiermengenänderungswert DMA durch Division der vorangehenden Dosiermenge DM durch den Dosiermengenänderungsfaktor DMF. In Programmschritt S26 wird das Programm zur Ermittlung des Dosiermengenänderungswerts DMA beendet.

Aus der Fig. 2 wird deutlich, dass dann, wenn sich bei der Feineinstellung die Größe der Prozessvariablen in großem Maße ändert (siehe Prozessvariablen PV19, PV20, PV21 in Fig. 2), die Feineinstellung B der Dosiermenge DM abgebrochen wird und erneut eine Grobeinstellung A der Dosiermenge DM, wie anhand der Beschreibung von Fig. 3 beschrieben, durchgeführt wird.

### Bezugszeichenliste

- 2: Filtereinheit
- 4: Filter
- 6: Leitung
- 8: Pumpe
- 10: Leitung
- 12: Sammeltank
- 14: Ausgangsleitung
- 16: Leitung
- 18: Pumpe
- 20: Dosierpumpe
- 22: Pumpenteil
- 24: Antrieb
- 26: Steuerung
- 28: Leitung
- 30: Signalleitung
- 32: Signalleitung

- A: Grobeinstellung
- B: Feineinstellung
- D1: erster Dosierschritt
- DIR: Steigungswert
- DM: Dosiermenge
- DMA: Dosiermengenänderungswert
- DMF: Dosiermengenänderungsfaktor
- DMₘₐₓ: Maximale Dosiermenge
- DMₘᵢₙ: Minimale Dosiermenge
- DM3: Dosiermenge
- DM5: Dosiermenge
- M: Anzahl der Filterzyklen pro Dosierschritt
- N: Ergebnis
- PE1: Programmende
- PE2: Programmende
- PV1: Prozessvariable für den ersten Dosierschritt
- R1: Abfrage
- R2: Abfrage
- R3: Abfrage
- R4: Abfrage
- R5: Abfrage
- R6: Abfrage
- R7: Abfrage
- R8: Abfrage
- R9: Abfrage
- R10: Abfrage
- R11: Abfrage
- R12: Abfrage
- R13: Abfrage
- R14: Abfrage
- R15: Abfrage
- R16: Abfrage
- S1: Programmschritt
- S2: Programmschritt
- S3: Programmschritt
- S4: Programmschritt
- S5: Programmschritt
- S6: Programmschritt
- S7: Programmschritt
- S8: Programmschritt
- S9: Programmschritt
- S10: Programmschritt
- S11: Programmschritt
- S12: Programmschritt
- S13: Programmschritt
- S14: Programmschritt
- S15: Programmschritt
- S16: Programmschritt
- S17: Programmschritt
- S18: Programmschritt
- S19: Programmschritt
- S20: Programmschritt
- S21: Programmschritt
- S22: Programmschritt
- S23: Programmschritt
- S24: Programmschritt
- S25: Programmschritt
- ST1: Start
- ST2: Start
- ST3: Start
- Y: Ergebnis

## Patentansprüche

1. Filterverfahren, bei welchem eine zu filternde Flüssigkeit durch einen Filter (4) geleitet wird, der Filter (4) in vorgegebenen Abständen rückgespült wird und der Flüssigkeit eingangsseitig des Filters (4) ein Vorbehandlungsmittel beigefügt wird, **dadurch gekennzeichnet, dass** während der Filterung kontinuierlich eine die Effizienz der Filterung beschreibende Prozessvariable berechnet wird und eine Dosiermenge (DM) des Vorbehandlungsmittels auf der Grundlage der Werte für die Prozessvariable oder eines hiervon abgeleiteten Kennwerts in vorgegebenen Abständen angepasst wird, wobei der Filterprozess in mehrere aufeinander folgende, jeweils mit einer Rückspülung des Filters (4) beginnende und vor Beginn der nächsten Rückspülung endende Filterzyklen aufgeteilt wird, wobei eine zu speichernde Prozessvariable für jeden Filterzyklus am Ende des Filterzyklus gespeichert wird, aus zwei oder mehr gespeicherten Prozessvariablen eine Funktionskurve ermittelt wird und ein Steigungswert (DIR) dieser Funktionskurve für jeden Dosierschritt ermittelt wird, wobei eine Vergrößerung des Steigerungswertes (DIR) gegenüber dem Steigerungswert des vorangehenden Dosierschrittes eine Verschlechterung der Effizienz der Filterung anzeigt, während ein sich gegenüber dem Steigerungswert (DIR) des vorangehenden Dosierschrittes verringernder Steigerungswert eine verbesserte Effizienz der Filterung bedeutet.

2. Filterverfahren nach Anspruch 1, **dadurch gekennzeichnet, dass** die Dosiermenge (DM) in Dosierschritten, welche jeweils eine bestimmte Anzahl von Filterzyklen umfassen, angepasst wird.

3. Filterverfahren nach einem der vorangehenden Ansprüche, **dadurch gekennzeichnet, dass** die Prozessvariable ein relativer Energieverbrauch pro Filterzyklus ist, welcher durch Division eines Gesamtenergieverbrauchs pro Filterzyklus mit einem pro Filterzyklus erzeugten Netto-Permeatvolumen berechnet wird, wobei der Gesamtenergieverbrauch die Summe der pro Filterzyklus für die Filterung, die Rückspülung und die Dosierung des Vorbehandlungsmittels erforderliche Energie sowie eines ein Äquivalent zu den Vorbehandlungsmittelverbrauch darstellenden Energiewertes ist.

4. Filterverfahren nach Anspruch 3, **dadurch gekennzeichnet, dass** der Gesamtenergieverbrauch pro Filterzyklus die Summe der pro Filterzyklus für die Filterung, die Rückspülung und die Dosierung des Vorbehandlungsmittels erforderliche Energie sowie eines ein Äquivalent zu dem Vorbehandlungsmittelverbrauch darstellenden Energiewerts ist.

5. Filterverfahren nach einem der Ansprüche 3 oder 4, **dadurch gekennzeichnet, dass** das pro Filterzyklus erzeugte Netto-Permeatvolumen das pro Filterzylus erzeugte Permeatvolumen abzüglich eines pro Filterzyklus zur Rückspülung des Filters (4) verwendeten Permeatvolumens ist.

6. Filterverfahren nach einem der vorangehenden Ansprüche, **dadurch gekennzeichnet, dass** in einer ersten Phase des Filterprozesses eine Grobeinstellung (A) der Dosiermenge (DM) vorgenommen wird und die Dosiermenge (DM) in einer zweiten Phase des Filterprozesses ausgehend von einem bei der Grobeinstellung (A) ermittelten Dosiermenge (DM) in einer Feineinstellung (B) optimiert wird.

7. Filterverfahren nach Anspruch6, **dadurch gekennzeichnet, dass** die Dosiermenge (DM) bei der Grobeinstellung (A) in aufeinander folgenden Dosierschritten solange um den gleichen Betrag erhöht wird, solange sich die gespeicherte Prozessvariable in eine gleiche Richtung zu einem einen optimalen Prozesszustand des Filterprozesses darstellenden Wert verändert, wobei die Grobeinstellung (A) dann beendet wird, wenn sich die gespeicherte Prozessvariable in entgegengesetzte Richtung von dem den optimalen Prozesszustand darstellenden Wert wegbewegt.

8. Filterverfahren nach einem der Ansprüche 6 oder 7, **dadurch gekennzeichnet, dass** die Dosiermenge (DM) bei der Feineinstellung (B) der Dosierung in aufeinanderfolgenden Dosierschritten jeweils angepasst wird, wobei sie in Abhängigkeit von der Entwicklung des Steigungswerts (DIR) verändert oder beibehalten wird.

9. Filterverfahren nach Anspruch 8, **dadurch gekennzeichnet, dass** die Dosiermenge (DM) bei den Dosierschritten der Feineinstellung (B) variabel geändert wird, wobei der Betrag, um welchen die Dosiermenge (DM) geändert wird, auf der Grundlage der Tendenz der Steigungswerte (DIR) in den direkt vorangehenden Dosierschritten festgelegt wird.

10. Filterverfahren nach Anspruch 8, **dadurch gekennzeichnet, dass** die Dosiermenge (DM) bei einem negativen Wert der Prozessvariablen beibehalten wird.

11. Filterverfahren nach einem der Ansprüche 6 bis 10, **dadurch gekennzeichnet, dass** die Feineinstellung (B) der Dosiermenge (DM) bei einer sprunghaften Änderung der Prozessvariablen beendet wird und eine erneute Grobeinstellung (A) der Dosiermenge (DM) vorgenommen wird.

12. Filterverfahren nach einem der vorangehenden Ansprüche, **dadurch gekennzeichnet, dass** das Vorbehandlungsmittel der zu filternden Flüssigkeit mit einer Verzögerung nach einer Rückspülung des Filters (4) beigefügt wird.

13. Filterverfahren nach einem der vorangehenden Ansprüche, **dadurch gekennzeichnet, dass** der Beginn und das Ende eines Filterzyklus durch Überwachung der kontinuierlich berechneten Prozessvariablen oder einer in der Filtervorrichtung gemessenen Prozessgröße ermittelt werden.

14. Filterverfahren nach Anspruch 13, **dadurch gekennzeichnet, dass** ein Beginn des Filterzyklus ermittelt wird, wenn die kontinuierlich berechnete Prozessvariable oder die gemessene Prozessgröße rapide abnimmt und ein Ende des Filterzyklus ermittelt wird, wenn die kontinuierlich berechnete Prozessvariable oder die gemessene Prozessgröße rapide ansteigt.

## Claims

1. A filtering method, with which a fluid to be filtered is led through a filter (4), the filter (4) is back-flushed at predetermined intervals and a pre-treatment agent is added to the fluid at the entry side of the filter (4), **characterised in that** a process variable which describes the efficiency of the filtration is continuously computed during the filtration, and a metering quantity (DM) of the pre-treatment agent is adjusted in predetermined intervals on the basis of the values for the process variable or of a characteristic value derived from this, wherein the filtering process is divided into several consecutive filtering cycles which each begin with a back-flushing of the filter (4) and end before the beginning of the next back-flushing, wherein a process variable to be stored is stored for each filtering cycle at the end of the filtering cycle, a function curve is determined from two or more stored process variables and a gradient value (DIR) of this function curve is determined for each metering step, wherein an increase of the gradient value (DIR) with respect to the gradient value of the preceding metering step indicates a worsening of the efficiency of the filtration, whereas a gradient value which reduces with respect to the gradient value (DIR) of a preceding metering step means an improved efficiency of the filtration.

2. A filtering method according to claim 1, **characterised in that** the metering quantity (DM) is adjusted in metering steps which each comprise a certain number of filtering cycles.

3. A filtering method according to one of the preceding claims, **characterised in that** the process variable is a relative energy consumption per filtering cycle which is computed by way of dividing the total energy consumption per filtering cycle by a net permeate volume produced per filtering cycle, wherein the total energy consumption is the sum of the energy necessary per filtering cycle, for the filtering, for the back-flushing and for the metering of the pre-treatment agent as well as of an energy value representing an equivalent to the pre-treatment agent consu mption.

4. A filtering method according to claim 3, **characterised in that** the total energy consumption per filtering cycle is the sum of the energy necessary per filtering cycle, for the filtering, for the back-flushing and for the metering of the pre-treatment agent as well as of an energy value representing an equivalent to the pre-treatment agent consumption.

5. A filtering method according to claim 3 or 4, **characterised in that** the net permeate volume which is produced per filtering cycle is the permeate volume produced per filtering cycle minus a permeate volume which is used per filtering cycle for back-flushing the filter (4).

6. A filtering method according to one of the preceding claims, **characterised in that** a coarse setting (A) of the metering quantity (DM) is carried out in a first phase of the filtering process, and the metering quantity (DM) in a second phase of the filtering process is optimised in a fine setting (B), starting from a metering quantity (DM) determined with the coarse setting (A).

7. A filtering method according to claim 6, **characterised in that** the metering quantity (DM) with the coarse setting (A) is increased by the same amount in consecutive metering steps, for as long as the stored process variable changes in the same direction to a value representing an optimal process state of the filtering process, wherein the coarse setting (A) is finished when the stored process variable moves away from the value representing the optimal process state in the opposite direction.

8. A filtering method according to one of the claims 6 or 7, **characterised in that** the metering quantity (DM) with the fine setting (B) of the metering is adjusted in consecutive metering steps, wherein it is changed or retained in dependence on the development of the gradient value (DIR).

9. A filtering method according to claim 8, **characterised in that** the metering quantity (DM) is changed in a variable manner with the metering steps of the fine setting (B), wherein the amount, by which the metering quantity (DM) is changed, is determined on the basis of the tendency of the gradient values (DIR) in the directly preceding metering steps.

10. A filtering method according to claim 8, **characterised in that** the metering quantity (DM) is retained given a negative value of the process variables.

11. A filtering method according to one of the claims 6 to 10, **characterised in that** the fine setting (B) of the metering quantity (DM) is ended given an abrupt change of the process variable and a renewed coarse setting (A) of the metering quantity (DM) is carried out.

12. A filtering method according to one of the preceding claims, **characterised in that** the pre-treatment agent is added to the fluid to be filtered with a delay after a back-flushing of the filter (4).

13. A filtering method according to one of the preceding claims, **characterised in that** the start and the end of a filtering cycle are determined by monitoring the continuously computed process variables or a process value measured in the filter device.

14. A filtering method according to claim 13, **characterised in that** a start of a filtering cycle is determined if the continuously computed process variable or the measured process value decreases rapidly and an end of a filtering cycle is determined if the continuously computed process variable or the measured process value increases rapidly.

## Revendications

1. Procédé de filtration dans lequel un liquide à filtrer est amené à passer à travers un filtre (4), le filtre (4) est lavé à contre-courant à des intervalles prédéterminés, et un agent de prétraitement est ajouté au liquide côté entrée du filtre (4), **caractérisé en ce que**, pendant la filtration, une variable de processus décrivant l'efficacité de la filtration est calculée en continu, et une quantité de dosage (DM) de l'agent de prétraitement est ajustée à des intervalles prédéterminés sur la base des valeurs de la variable de processus ou d'une valeur caractéristique qui en est dérivée, dans lequel le processus de filtration est divisé en plusieurs cycles de filtration successifs, chacun commençant par un lavage à contre-courant du filtre (4) et se terminant avant le début du lavage à contre-courant suivant, dans lequel une variable de processus à enregistrer pour chaque cycle de filtration est enregistrée à la fin du cycle de filtration, une courbe de fonction est déterminée à partir de deux variables de processus enregistrées ou plus, et une valeur de coefficient directeur (DIR) de cette courbe de fonction est déterminée pour chaque étape de dosage, dans lequel une augmentation de la valeur de coefficient directeur (DIR) par rapport à la valeur de coefficient directeur DIR de l'étape de dosage précédente indique une détérioration de l'efficacité de la filtration, tandis qu'une valeur de coefficient directeur (DIR) en diminution par rapport à la valeur de coefficient directeur (DIR) de l'étape de dosage précédente indique une efficacité améliorée de la filtration.

2. Procédé de filtration selon la revendication 1, **caractérisé en ce que** la quantité de dosage (DM) est ajustée lors des étapes de mesure, chacune comprenant un nombre spécifique de cycles de filtration.

3. Procédé de filtration selon l'une quelconque des revendications précédentes, **caractérisé en ce que** la variable de processus est une consommation d'énergie relative par cycle de filtration, qui est calculée en divisant une consommation d'énergie totale par cycle de filtration par un volume net de perméat généré par cycle de filtration, la consommation d'énergie totale étant la somme de l'énergie nécessaire par cycle de filtration pour la filtration, le lavage à contre-courant et le dosage de l'agent de prétraitement et d'une valeur d'énergie représentant un équivalent de la consommation d'agent de prétraitement.

4. Procédé de filtration selon la revendication 3, **caractérisé en ce que** la consommation d'énergie totale par cycle de filtration est la somme de l'énergie nécessaire par cycle de filtration pour la filtration, le lavage à contre-courant et le dosage de l'agent de prétraitement et d'une valeur d'énergie représentant un équivalent de la consommation d'agent de prétraitement.

5. Procédé de filtration selon l'une des revendications 3 ou 4, **caractérisé en ce que** le volume net de perméat généré par cycle de filtration est le volume de perméat généré par cycle de filtration moins un volume de perméat utilisé par cycle de filtration pour le lavage à contre-courant du filtre (4).

6. Procédé de filtration selon l'une des revendications précédentes, **caractérisé en ce que** dans une première phase du processus de filtration, un réglage grossier (A) de la quantité de dosage (DM) est effectué, et la quantité de dosage (DM), lors d'une seconde phase du processus de filtration, est optimisée, en partant d'une quantité de dosage (DM) déterminée par le réglage grossier (A), en un réglage fin (B).

7. Procédé de filtration selon la revendication 6, **caractérisé en ce que** la quantité de dosage (DM), lors du réglage grossier (A), est augmentée en étapes de dosage successives de la même quantité tant que la variable de processus enregistrée change dans la même direction vers une valeur représentant un état de processus optimum du processus de filtration, le réglage grossier (A) se terminant lorsque la variable de processus enregistrée se déplace dans la direction opposée à la valeur représentant l'état de processus optimum.

8. Procédé de filtration selon l'une des revendications 6 ou 7, **caractérisé en ce que** la quantité de dosage (DM), lors du réglage fin (B), est adaptée au dosage lors d'étapes de dosage successives respectives, celle-ci étant modifiée ou maintenue en fonction de l'évolution de la valeur du coefficient directeur (DIR).

9. Procédé de filtration selon la revendication 8, **caractérisé en ce que** la quantité de dosage (DM) est modifiée de manière variable pendant les étapes de dosage du réglage fin (B), le montant de la modification de la quantité de dosage (DM) étant défini en fonction de la tendance des valeurs de coefficient directeur (DIR) lors des étapes de dosage immédiatement précédentes.

10. Procédé de filtration selon la revendication 8, **caractérisé en ce que** la quantité de dosage (DM) est maintenue en cas de valeur négative de la variable de procédé.

11. Procédé de filtration selon l'une des revendications 6 à 10, **caractérisé en ce que** le réglage fin (B) de la quantité de dosage (DM) prend fin en cas de changement brutal des variables de processus, et un nouveau réglage grossier (A) de la quantité de dosage (DM) est entrepris.

12. Procédé de filtration selon l'une des revendications précédentes, **caractérisé en ce que** l'agent de prétraitement est ajouté au liquide à filtrer avec un délai après un lavage à contre-courant du filtre (4).

13. Procédé de filtration selon l'une des revendications précédentes, **caractérisé en ce que** le début et la fin d'un cycle de filtration sont déterminés en surveillant les variables de processus calculées en continu ou une grandeur de processus mesurée dans le dispositif de filtration.

14. Procédé de filtration selon la revendication 13, **caractérisé en ce qu'**un début du cycle de filtration est défini lorsque la variable de processus calculée en continu ou la grandeur de processus mesurée diminue rapidement, et une fin du cycle de filtration est définie lorsque la variable de processus calculée en continu ou la grandeur de processus mesurée augmente rapidement.
